(19) Europäisches Patentamt
European Patent Office
Office européen des brevets

(11) **EP 4 059 711 A1**

(12) **EUROPEAN PATENT APPLICATION**
published in accordance with Art. 153(4) EPC

(43) Date of publication:
**21.09.2022 Bulletin 2022/38**

(21) Application number: **20887657.3**

(22) Date of filing: **11.11.2020**

(51) International Patent Classification (IPC):
**B32B 27/20** (2006.01)     **C08K 7/04** (2006.01)
**C08L 101/06** (2006.01)     **C09D 129/02** (2006.01)
**C09D 139/02** (2006.01)     **C09D 201/06** (2006.01)
**C09D 7/20** (2018.01)     **C09D 7/61** (2018.01)

(52) Cooperative Patent Classification (CPC):
**B32B 27/20; C08K 7/04; C08L 101/06; C09D 7/20;
C09D 7/61; C09D 129/02; C09D 139/02;
C09D 201/06**

(86) International application number:
**PCT/JP2020/042024**

(87) International publication number:
**WO 2021/095755 (20.05.2021 Gazette 2021/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2019 JP 2019205655**

(71) Applicant: **SUMITOMO CHEMICAL COMPANY
LIMITED
Tokyo 103-6020 (JP)**

(72) Inventors:
• **YAMANISHI, Hiromi
Osaka-shi, Osaka 554-8558 (JP)**
• **SHIBATA, Daisuke
Osaka-shi, Osaka 554-8558 (JP)**

(74) Representative: **Winter, Brandl - Partnerschaft
mbB
Alois-Steinecker-Straße 22
85354 Freising (DE)**

(54) **COATING LIQUID**

(57)     The present invention provides a coating liquid comprising a hydroxyl group-containing resin, an inorganic layered compound and a liquid medium, wherein an amount of sodium (Na) in the coating liquid is 2,500 ppm or less on a weight basis relative to a solids content of the coating liquid.

**EP 4 059 711 A1**

**Description**

Technical Field

The present invention relates to a coating liquid.

Background Art

Packaging materials for, for example, foods and cosmetics are required to have characteristics to suppress transmission of gases (e.g., water vapor) (that is, gas barrier properties) in order to prevent deterioration of them. As a packaging material having high gas barrier properties, a laminate having, on a substrate, a gas barrier layer formed by using polyvinyl alcohol or its derivative is known. Here, the "gas barrier layer" means a layer used for suppressing transmission of gases.

For example, in Patent Literature 1, it is disclosed to form a gas barrier layer from a dispersion containing polyvinyl alcohol, montmorillonite, water, isopropanol and butanol. In Patent Literature 2, a gas barrier layer containing a polyvinyl amine-polyvinyl alcohol copolymer is disclosed.

Citation List

Patent Literature

Patent Literature 1 Japanese Patent Laid-Open No. 2005-220154
Patent Literature 2
Japanese Translation of PCT International Application Publication No. 2012-502163

Summary of Invention

Technical Problem

When a laminate having a gas barrier layer (occasionally abbreviated as a "gas barrier laminate" hereinafter) is held under the conditions of high temperature and high humidity, its water vapor transmission rate sometimes increases. The present invention has been made by focusing on such circumstances, and the object of the present invention is to provide a coating liquid capable of manufacturing a gas barrier laminate exhibiting a low water vapor transmission rate even after it is held under the conditions of high temperature and high humidity.

Solution to Problem

The present invention capable of achieving the above object is as follows.

[1] A coating liquid comprising a hydroxyl group-containing resin, an inorganic layered compound and a liquid medium, wherein an amount of sodium (Na) in the coating liquid is 2,500 ppm or less, preferably 1,500 ppm or less, more preferably 1,000 ppm or less, on a weight basis relative to a solids content of the coating liquid.
[2] The coating liquid according to the above [1], wherein the amount of sodium (Na) in the coating liquid is 0.01 ppm or more, more preferably 0.1 ppm or more, and still more preferably 1 ppm or more, on a weight basis relative to a solids content of the coating liquid.
[3] The coating liquid according to the above [1] or [2], wherein an amount of hydroxyl groups per 100 g of the hydroxyl group-containing resin is 1.50 to 2.27 mol, more preferably 1.55 to 2.20 mol, and still more preferably 1.60 to 2.10 mol.
[4] The coating liquid according to any one of the above [1] to [3], wherein the hydroxyl group-containing resin further has an amino group.
[5] The coating liquid according to the above [4], wherein an amount of amino groups per 100 g of the hydroxyl group-containing resin is 0.046 to 0.682 mol, more preferably 0.060 to 0.50 mol, and still more preferably 0.10 to 0.30 mol.
[6] The coating liquid according to any one of the above [1] to [5], wherein the number-average molecular weight of the hydroxyl group-containing resin is 10,000 to 50,000, more preferably 12,000 to 40,000, and still more preferably 15,000 to 30,000.

[7] The coating liquid according to any one of the above [1] to [6], wherein the hydroxyl group-containing resin is a vinyl amine-vinyl alcohol copolymer.

[8] The coating liquid according to the above [7], wherein the degree of saponification of the vinyl amine-vinyl alcohol copolymer is 80 to 100%, more preferably 90 to 100%, and still more preferably 95 to 100%.

[9] The coating liquid according to any one of the above [1] to [8], wherein a content of the hydroxyl group-containing resin is 0.2 to 9.05% by weight relative to the whole coating liquid.

[10] The coating liquid according to the above [9], wherein the content of the hydroxyl group-containing resin is 0.4% by weigh or more, still more preferably 0.5% by weight or more, particularly preferably 1.0% by weight or more, and most preferably 2.0% by weight or more, relative to the whole coating liquid.

[11] The coating liquid according to the above [9] or [10], wherein the content of the hydroxyl group-containing resin is 8.0% by weight or less, still more preferably 6.0% by weight or less, particularly preferably 5.5% by weight or less, and most preferably 4.0% by weight or less, relative to the whole coating liquid.

[12] The coating liquid according to any one of the above [1] to [11], wherein the liquid medium comprises water and at least one selected from the group consisting of methanol, ethanol, 1-propanol, 2-propanol and 1-butanol.

[13] The coating liquid according to the above [12], wherein the total amount of at least one selected from the group consisting of methanol, ethanol, 1-propanol, 2-propanol and 1-butanol is 1 to 70 parts by weight, more preferably 5 to 60 parts by weight, and still more preferably 10 to 50 parts by weight, per 100 parts by weight of the liquid medium.

[14] The coating liquid according to any one of the above [1] to [11], wherein the liquid medium comprises water and ethanol.

[15] The coating liquid according to the above [14], wherein an amount of ethanol is 1 to 70 parts by weight, more preferably 5 to 60 parts by weight, and still more preferably 10 to 50 parts by weight, per 100 parts by weight of the liquid medium.

[16] The coating liquid according to any one of the above [1] to [15], wherein a content of the liquid medium is 90 to 99.5% by weight, more preferably 91 to 99% by weight, and still more preferably 92 to 98% by weight, relative to the whole coating liquid.

[17] The coating liquid according to any one of the above [1] to [16], wherein the inorganic layered compound is a clay mineral, and preferably a smectite group clay mineral.

[18] The coating liquid according to any one of the above [1] to [16], wherein the inorganic layered compound is montmorillonite.

[19] The coating liquid according to any one of the above [1] to [18], wherein a content of the inorganic layered compound is 0.047 to 6.0% by weight relative to the whole coating liquid.

[20] The coating liquid according to the above [19], wherein the content of the inorganic layered compound is 0.050% by weight or more, still more preferably 0.10% by weight or more, particularly preferably 0.20% by weight or more, and most preferably 1.0% by weight or more, relative to the whole coating liquid.

[21] The coating liquid according to the above [19] or [20], wherein the content of the inorganic layered compound is 5.5% by weight or less, more preferably 5.0% by weight or less, still more preferably 4.5% by weight or less, particularly preferably 4.4% by weight or less, and most preferably 4.0% by weight or less, relative to the whole coating liquid.

[22] The coating liquid according to any one of the above [1] to [21], having pH of 7 to 13, and more preferably 8.5 to 10.

[23] A coating film formed from the coating liquid according to any one of the above [1] to [22].

[24] The coating film according to the above [23], having a thickness of 10 nm to 20 μm, more preferably 20 nm to 10 μm, and still more preferably 30 nm to 10 μm.

[25] A laminate having a laminated structure comprising the coating film according to the above [23] or [24] and a substrate.

[26] A laminate having a laminated structure comprising the coating film according to the above [23] or [24], an inorganic substance layer and a substrate in this order.

[27] The laminate according to the above [26], wherein an inorganic substance that forms the inorganic substance layer is an inorganic oxide, more preferably at least one selected from the group consisting of aluminum oxide, silicon oxide and magnesium oxide, and still more preferably aluminum oxide.

[28] The laminate according to the above [26] or [27], wherein a thickness of the inorganic substance layer is 1 to 200 nm, more preferably 2 to 150 nm, and still more preferably 3 to 100 nm.

[29] The laminate according to any one of the above [25] to [28], wherein a thickness of the substrate is 5 to 50 μm, more preferably 7 to 40 μm, and still more preferably 9 to 30 μm.

[30] A coating film comprising a hydroxyl group-containing resin and an inorganic layered compound, wherein an amount of sodium (Na) in the coating film is 2,500 ppm or less, preferably 1,500 ppm or less, and more preferably 1,000 ppm or less, on a weight basis relative to the whole coating film.

[31] The coating film according the above [30], wherein the amount of sodium (Na) in the coating film is 0.01 ppm or more, more preferably 0.1 ppm or more, and still more preferably 1 ppm or more, on a weight basis relative to the whole coating film.

[32] The coating film according to the above [30] or [31], wherein an amount of hydroxyl groups per 100 g of the hydroxyl group-containing resin is 1.50 to 2.27 mol, more preferably 1.55 to 2.20 mol, and still more preferably 1.60 to 2.10 mol.

[33] The coating film according to any one of the above [30] to [32], wherein the hydroxyl group-containing resin further has an amino group.

[34] The coating film according to the above [33], wherein an amount of amino groups per 100 g of the hydroxyl group-containing resin is 0.046 to 0.682 mol, more preferably 0.060 to 0.50 mol, and still more preferably 0.10 to 0.30 mol.

[35] The coating film according to any one of the above [30] to [34], wherein the number-average molecular weight of the hydroxyl group-containing resin is 10,000 to 50,000, more preferably 12,000 to 40,000, and still more preferably 15,000 to 30,000.

[36] The coating film according to any one of the above [30] to [35], wherein the hydroxyl group-containing resin is a vinyl amine-vinyl alcohol copolymer.

[37] The coating film according to the above [36], wherein the degree of saponification of the vinyl amine-vinyl alcohol copolymer is 80 to 100%, more preferably 90 to 100%, and still more preferably 95 to 100%.

[38] The coating film according to any one of the above [30] to [37], wherein the inorganic layered compound is a clay mineral, and preferably a smectite group clay mineral.

[39] The coating film according to any one of the above [30] to [37], wherein the inorganic layered compound is montmorillonite.

[40] The coating film according to any one of the above [30] to [39], having a thickness of 10 nm to 20 $\mu$m, more preferably 20 nm to 10 $\mu$m, and still more preferably 30 nm to 10 $\mu$m.

[41] A laminate having a laminated structure comprising the coating film according to any one of the above [30] to [40] and a substrate.

[42] A laminate having a laminated structure comprising the coating film according to any one of the above [30] to [40], an inorganic substance layer and a substrate in this order.

[43] The laminate according to the above [42], wherein an inorganic substance that forms the inorganic substance layer is an inorganic oxide, more preferably at least one selected from the group consisting of aluminum oxide, silicon oxide and magnesium oxide, and still more preferably aluminum oxide.

[44] The laminate according to the above [42] or [43], wherein a thickness of the inorganic substance layer is 1 to 200 nm, more preferably 2 to 150 nm, and still more preferably 3 to 100 nm.

[45] The laminate according to any one of the above [41] to [44], wherein a thickness of the substrate is 5 to 50 $\mu$m, more preferably 7 to 40 $\mu$m, and still more preferably 9 to 30 $\mu$m.

Advantageous Effect of Invention

From the coating liquid of the present invention, a gas barrier laminate exhibiting a low water vapor transmission rate even after it is held under the conditions of high temperature and high humidity can be manufactured.

Description of Embodiments

<Coating liquid>

Hereinafter, the coating liquid of the present invention will be sequentially described. Examples described later, preferred descriptions, etc. can be combined unless they are inconsistent with each other.

The coating liquid of the present invention comprises a hydroxyl group-containing resin, an inorganic layered compound and a liquid medium, and is characterized in that the amount of sodium (Na) in the coating liquid is 2,500 ppm or less on a weight basis relative to a solids content of the coating liquid. As a result of earnest studies by the present inventors, they have found that from the coating liquid having been reduced in the amount of Na, a gas barrier laminate exhibiting a low water vapor transmission rate even after it is held under the conditions of high temperature and high humidity can be manufactured.

From the viewpoint of low water vapor transmission rate, the amount of Na is preferably 1,500 ppm or less, and more preferably 1,000 ppm or less, on a weight basis relative to a solids content of the coating liquid. From the viewpoint of low water vapor transmission rate, the lower limit of the amount of Na is not particularly restricted, and the amount of Na is preferably smaller. However, from the viewpoint of cost, etc., it is difficult to industrially manufacture a coating liquid in which the amount of Na is zero. Accordingly, the amount of Na is preferably 0.01 ppm or more, more preferably 0.1 ppm or more, and still more preferably 1 ppm or more, on a weight basis relative to a solids content of the coating liquid.

The amount of Na on a weight basis relative to the whole coating liquid can be measured by a method described in Examples described later. From this amount of Na and the solids content of the coating liquid, the amount of Na on a weight basis relative to a solids content of the coating liquid can be calculated. The solids content of the coating liquid can be calculated by the following method (described as "drying aid method" hereinafter).

<Drying aid method>

1. Drying aid

Anhydrous sodium sulfate (having been dried at 105°C for 120 minutes or more)

2. Operation

(1) A 110 mL aluminum cup is placed in a dryer, dried at 130°C for 60 minutes, then taken out, and cooled for 30 minutes in a desiccator.
(2) In the aluminum cup after cooling, 20 to 30 g of anhydrous sodium sulfate is introduced, and the total amount of the aluminum cup and the anhydrous sodium sulfate (described as "total amount 1" hereinafter) is weighed.
(3) In the aluminum cup of the above (2) (that is, aluminum cup containing anhydrous sodium sulfate), 1.5 to 2.0 g of a sample (coating liquid) is introduced, and the total amount of the aluminum cup, the anhydrous sodium sulfate and the sample (described as "total amount 2" hereinafter) is weighed.
(4) The anhydrous sodium sulfate and the sample in the aluminum cup are stirred until they become homogeneous.
(5) The aluminum cup of the above (4) (that is, aluminum cup containing anhydrous sodium sulfate and sample) is placed in a dryer, dried at 105°C for 120 minutes, then taken out, and cooled for 30 minutes in a desiccator.
(6) The total amount of the dried substance and the aluminum cup after cooling (described as "total amount 3" hereinafter) is weighed.
(7) From the following equation, a solids content of the sample (coating liquid) is calculated.

$$\text{Solids content (\% by weight)} =$$

$$100 \times [\text{total amount 3 (g)} - \text{total amount 1 (g)}]/\text{amount of sample (g)}$$

$$\text{Amount of sample (g)} = \text{total amount 2 (g)} - \text{total amount 1 (g)}$$

From the viewpoint of corrosion inhibition of the inorganic substance layer, pH of the coating liquid of the present invention is desirably alkaline. This pH is preferably 7 to 13, and more preferably 8.5 to 10.

<Hydroxyl group-containing resin>

The coating liquid of the present invention contains a hydroxyl group-containing resin. Only one of the hydroxyl group-containing resins may be used, or two or more thereof may be used in combination.
The hydroxyl group-containing resin may be a homopolymer or may be a copolymer. The copolymer may be any of a block copolymer, an alternating copolymer, a random copolymer and a combination of them. Examples of the hydroxyl group-containing resins include polyvinyl alcohol (PVA), a vinyl amine-vinyl alcohol copolymer, a (meth)acrylic acid-vinyl alcohol copolymer, an ethylenevinyl alcohol copolymer (EVOH), polysaccharides, and derivatives thereof. Here, the "(meth)acrylic acid" means acrylic acid and/or methacrylic acid.
From the viewpoints of low water vapor transmission rate and film forming properties, the amount of hydroxyl groups per 100 g of the hydroxyl group-containing resin is preferably 1.50 to 2.27 mol, more preferably 1.55 to 2.20 mol, and still more preferably 1.60 to 2.10 mol. This amount of hydroxyl groups can be measured by proton nuclear magnetic resonance ($^1$H NMR) analysis.
In order to achieve a low water vapor transmission rate, the hydroxyl group-containing resin preferably further has an amino group. From the viewpoints of low water vapor transmission rate and adhesion properties of the gas barrier layer to the substrate, the amount of amino groups per 100 g of the hydroxyl group-containing resin is preferably 0.046 to 0.682 mol, more preferably 0.060 to 0.50 mol, and still more preferably 0.10 to 0.30 mol. This amount of amino groups can be measured by proton nuclear magnetic resonance ($^1$H NMR) analysis.

From the viewpoints of low water vapor transmission rate, and flexibility and film forming properties of the gas barrier layer, the number-average molecular weight of the hydroxyl group-containing resin is preferably 10,000 to 50,000, more preferably 12,000 to 40,000, and still more preferably 15,000 to 30,000. This number-average molecular weight can be measured by gel permeation chromatography (GPC).

From the viewpoints of low water vapor transmission rate and adhesion properties of the gas barrier layer to the substrate, the hydroxyl group-containing resin is preferably a vinyl amine-vinyl alcohol copolymer. The vinyl amine-vinyl alcohol copolymer may be any one of a block copolymer, an alternating copolymer, a random copolymer and a combination of them. From the viewpoints of low water vapor transmission rate, adhesion properties of the gas barrier layer to the substrate, and film forming properties, the vinyl amine-vinyl alcohol copolymer is preferably a random copolymer. The amounts of hydroxyl groups and amino groups per 100 g of the vinyl amine-vinyl alcohol copolymer, and the measuring method therefor are as described above.

From the viewpoints of low water vapor transmission rate, and adhesion properties of the gas barrier layer to the substrate and film forming properties thereof, the degree of saponification of the vinyl amine-vinyl alcohol copolymer is preferably 80 to 100%, more preferably 90 to 100%, and still more preferably 95 to 100%. Here, the "degree of saponification of the vinyl amine-vinyl alcohol copolymer" means a ratio of the total amount of hydroxyl groups and amino groups to the total amount of "hydroxyl groups (-OH)" and "precursors of hydroxyl groups (e.g., -O-CO-CH$_3$)", and "amino groups (-NH$_2$)" and "precursors of amino groups (e.g., -NH-CHO)", which can be possessed by the vinyl amine-vinyl alcohol copolymer, (= 100 × (hydroxyl groups + amino groups)/(hydroxyl groups + precursors of hydroxyl groups + amino groups + precursors of amino groups)). This degree of saponification can be calculated from the amount of hydroxyl groups, etc. that can be measured by proton nuclear magnetic resonance ($^1$H-NMR) analysis.

From the viewpoints of low water vapor transmission rate, flexibility of the gas barrier layer, and film forming properties, the content of the hydroxyl group-containing resin is preferably 0.2% by weight or more, more preferably 0.4% by weight or more, still more preferably 0.5% by weight or more, particularly preferably 1.0% by weight or more, and most preferably 2.0% by weight or more, and is preferably 9.05% by weight or less, more preferably 8.0% by weight or less, still more preferably 6.0% by weight or less, particularly preferably 5.5% by weight or less, and most preferably 4.0% by weight or less, relative to the whole coating liquid.

<Inorganic layered compound>

The coating liquid of the present invention contains an inorganic layered compound. Only one of the inorganic layered compounds may be used, or two or more thereof may be used in combination.

The inorganic layered compound is, for example, a clay mineral. Only one of the clay minerals may be used, or two or more thereof may be used in combination. Examples of the clay minerals include kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and hydrotalcite. The clay minerals may be those having been improved in dispersibility, etc. by treatment with an organic substance (e.g., ion exchange).

The inorganic layered compound is preferably a smectite group clay mineral. Only one of the smectite group clay minerals may be used, or two or more thereof may be used in combination. Examples of the smectite group clay minerals include montmorillonite, beidellite, nontronite, saponite, sauconite, stevensite, and hectorite. The inorganic layered compound is more preferably montmorillonite. The smectite group clay minerals (particularly montmorillonite) may be those having been improved in dispersibility, etc. by treatment with an organic substance (e.g., ion exchange).

From the viewpoints of low water vapor transmission rate, and flexibility and film forming properties of the coating film, the content of the inorganic layered compound is preferably 0.047% by weight or more, more preferably 0.050% by weight or more, still more preferably 0.10% by weight or more, particularly preferably 0.20% by weight or more, and most preferably 1.0% by weight or more, and is preferably 6.0% by weight or less, more preferably 5.5% by weight or less, much more preferably 5.0% by weight or less, still more preferably 4.5% by weight or less, particularly preferably 4.4% by weight or less, and most preferably 4.0% by weight or less, relative to the whole coating liquid.

<Liquid medium>

The coating liquid of the present invention contains a liquid medium. The liquid medium preferably contains water and a liquid organic medium. Here the "liquid medium" means a medium that is liquid at 25°C and 1 atm, and the "liquid organic medium" means an organic compound that is liquid at 25°C and 1 atm. Only one of the liquid organic media may be used, or two or more thereof may be used in combination.

Examples of the liquid organic media include a monohydric alcohol, glycol, dimethylformamide, dimethyl sulfoxide, and acetone. Examples of the monohydric alcohols include methanol, ethanol, 1-propanol, 2-propanol, and 1-butanol.

When the liquid organic medium is used, the amount thereof is preferably 1 to 70 parts by weight, more preferably 5 to 60 parts by weight, and still more preferably 10 to 50 parts by weight, per 100 parts by weight of the liquid medium.

In one embodiment of the present invention, the liquid medium preferably contains water and at least one selected from the group consisting of methanol, ethanol, 1-propanol, 2-propanol and 1-butanol, and more preferably consists of water and at least one selected from the group consisting of methanol, ethanol, 1-propanol, 2-propanol and 1-butanol. From the viewpoints of stability of the coating liquid and drying time in the coating, the total amount of at least one selected from the group consisting of methanol, ethanol, 1-propanol, 2-propanol and 1-butanol in this embodiment is preferably 1 to 70 parts by weight, more preferably 5 to 60 parts by weight, and still more preferably 10 to 50 parts by weight, per 100 parts by weight of the liquid medium.

In another embodiment of the present invention, the liquid medium preferably contains water and ethanol, and more preferably consists of water and ethanol. From the viewpoints of stability of the coating liquid and drying time in the coating, the amount of ethanol in this embodiment is preferably 1 to 70 parts by weight, more preferably 5 to 60 parts by weight, and still more preferably 10 to 50 parts by weight, per 100 parts by weight of the liquid medium.

From the viewpoints of low water vapor transmission rate and film forming properties, the content of the liquid medium is preferably 90 to 99.5% by weight, more preferably 91 to 99% by weight, and still more preferably 92 to 98% by weight, relative to the whole coating liquid.

<Other components>

The coating liquid of the present invention may contain other components that are different from the aforesaid hydroxyl group-containing resin, inorganic layered compound and liquid medium, as long as the effect of the present invention is not inhibited. Examples of the other components include a chelate compound and a surfactant. Only one of each of the other components may be used, or two or more thereof may be used in combination.

<Manufacture of coating liquid>

The coating liquid of the present invention can be manufactured by mixing and stirring the aforesaid hydroxyl group-containing resin, inorganic layered compound and liquid medium, and if necessary, other components to prepare a dispersion, and reducing the amount of Na in the resulting dispersion.

The order of mixing the components is not particularly limited, and the dispersion before reduction of the amount of Na can be prepared by, for example, the following methods.

1) A method in which the hydroxyl group-containing resin and the liquid medium are mixed, they are stirred with heating to manufacture a solution of the hydroxyl group-containing resin, to the resulting solution of the hydroxyl group-containing resin is added the inorganic layered compound, and the resulting mixture is stirred, thereby preparing a dispersion.

2) A method in which the inorganic layered compound and the liquid medium are mixed and stirred to manufacture a dispersion of the inorganic layered compound, and the resulting dispersion of the inorganic layered compound and a solution of the hydroxyl group-containing resin separately manufactured are mixed and stirred, thereby preparing a dispersion.

3) A method in which the inorganic layered compound and the liquid medium are mixed and stirred to manufacture a dispersion of the inorganic layered compound, to the resulting dispersion of the inorganic layered compound is added the hydroxyl group-containing resin, and they are stirred with heating to dissolve the hydroxyl group-containing resin in the liquid medium, thereby preparing a dispersion.

The temperature for mixing and stirring the hydroxyl group-containing resin with the liquid medium to manufacture a solution, or the temperature for mixing and stirring the dispersion of the inorganic layered compound with the hydroxyl group-containing resin to dissolve the hydroxyl group-containing resin in the liquid medium is preferably 50 to 100°C, and more preferably 60 to 100°C, the stirring speed therefor is preferably 300 to 5,000 rpm, and more preferably 500 to 3,000 rpm, the peripheral velocity for the stirring is preferably 1 to 8 m/min, and more preferably 2 to 6 m/min, and the stirring time therefor is preferably 10 to 120 minutes, and more preferably 20 to 110 minutes.

The temperature for mixing and stirring the solution of the hydroxyl group-containing resin with the inorganic layered compound to manufacture a dispersion, or the temperature for mixing and stirring the inorganic layered compound with the liquid medium to manufacture a dispersion of the inorganic layered compound is preferably 20 to 100°C, and more preferably 30 to 80°C, the stirring speed therefor is preferably 500 to 5,000 rpm, and more preferably 1,000 to 5,000 rpm, the peripheral velocity for the stirring is preferably 1 to 20 m/min, and more preferably 2 to 15 m/min, and the stirring time therefor is preferably 10 to 150 minutes, and more preferably 20 to 120 minutes.

In order to improve dispersibility of the inorganic layered compound, it is preferable to carry out high-pressure dispersion treatment of a dispersion containing the inorganic layered compound using a high-pressure dispersion apparatus. Examples of the high-pressure dispersion apparatus include an ultra-high-pressure homogenizer manufactured by Microfluidics International Corporation, Nanomizer manufactured by NANOMIZER Inc., a Manton-Gaulin type high-pressure dispersion apparatus, and a homogenizer manufactured by IZUMI FOOD MACHINERY CO., LTD. Here, the high-pressure dispersion treatment is treatment in which high shear and/or high pressure is added to the dispersion by allowing the dispersion to pass through a plurality of capillaries at a high speed. In the aforesaid method 2) or 3), the solution of the hydroxyl group-containing resin or the dispersion before mixing of the hydroxyl group-containing resin may be subjected to the high-pressure dispersion treatment, or the solution of the hydroxyl group-containing resin or the dispersion after mixing of the hydroxyl group-containing resin may be subjected to the high-pressure dispersion treatment.

The diameter of the capillary of the high-pressure dispersion apparatus is preferably 1 to 1,000 $\mu$m. The pressure in the high-pressure dispersion treatment is preferably 500 to 2,000 kgf/cm$^2$, and more preferably 1,000 to 1,800 kgf/cm$^2$. The temperature in the high-pressure dispersion treatment is preferably 10 to 50°C, and more preferably 15 to 45°C.

Reduction of the amount of Na in the dispersion obtained as previously described can be carried out by, for example, cation exchange treatment using a cation exchange resin.

The cation exchange resin is, for example, a resin in which a functional group having cation exchange ability has been introduced. The cation exchange resins can be classified according to the strength of acidity of the functional group. Specifically, the cation exchange resins can be classified into a strongly acidic cation exchange resin having a sulfo group or the like as a functional group, and a weakly acidic cation exchange resin having a carboxyl group or the like as a functional group. Examples of resins in which a functional group having cation exchange ability is to be introduced include a styrenic resin, an acrylic resin, and a methacrylic resin. Moreover, the cation exchange resins are classified into a gel type and a microporous type according to a difference in resin structures such as degree of crosslinking and porosity. The cation exchange resin that can be used in the manufacture of the coating liquid is not particularly limited, and a general one can be used.

As the cation exchange resin, a commercial product can be used. Examples of the commercial products include "Duolite C255LFH" manufactured by Rohm and Haas Company, "DIAION SK1B" manufactured by Mitsubishi Chemical Corporation, and "Amberlite IR120B" manufactured by The Dow Chemical Company.

The amount of the cation exchange resin used and the time for the cation exchange treatment can be properly set by those skilled in the art according to the target amount of Na.

<Coating film and laminate>

By applying the coating liquid of the present invention to a support and drying the liquid, a coating film can be formed. The present invention also provides a coating film formed from the aforesaid coating liquid.

Also, the present invention provides a coating film comprising a hydroxyl group-containing resin and an inorganic layered compound, wherein an amount of sodium (Na) in the coating film is 2,500 ppm or less on a weight basis relative to the whole coating film. The amount of Na in the coating film is preferably 1,500 ppm or less, and more preferably 1,000 ppm or less, on a weight basis relative to the whole coating film. From the viewpoint of low water vapor transmission rate, the lower limit of the amount of Na is not particularly restricted, and the amount of Na is preferably smaller. However, from the viewpoint of cost, etc., it is difficult to industrially manufacture a coating film in which the amount of Na is zero and a coating liquid for forming it. Accordingly, the amount of Na in the coating film is preferably 0.01 ppm or more, more preferably 0.1 ppm or more, and still more preferably 1 ppm or more, on a weight basis relative to the whole coating film. Descriptions of the hydroxyl group-containing resin and the inorganic layered compound are as referred to above.

The coating film of the present invention is preferably used as a gas barrier layer. That is to say, the coating liquid of the present invention is preferably used for forming a gas barrier layer.

From the viewpoint of gas barrier properties, the thickness of the coating film (gas barrier layer) after drying is preferably 10 nm to 20 $\mu$m, more preferably 20 nm to 10 $\mu$m, and still more preferably 30 nm to 10 $\mu$m.

The support to which the coating liquid of the present invention is applied may be a substrate only or may be a laminate including other layers and a substrate. Examples of the other layers include an inorganic substance layer, an adhesive layer, and a primer layer.

Examples of the laminated structures of the laminate to which the coating liquid is applied include "primer layer/substrate", "inorganic substance layer/substrate", "inorganic substance layer/primer layer/substrate", "primer layer/inorganic substance layer/substrate", "primer layer/inorganic substance layer/primer layer/substrate", and "inorganic substance layer/first substrate/adhesive layer/second substrate". In the above embodiments, the layers and the substrates may be each a single layer or may be each composed of two or more layers. In the present specification, the "inorganic substance layer/substrate" refers to a state where the inorganic substance layer and the substrate are in direct contact with each other. Other expressions have the same meaning.

The inorganic substance layer may be formed from one inorganic substance only or may be formed from two or more inorganic substances. Examples of the inorganic substances include metals and inorganic oxides. Only one of the metals may be used, or two or more thereof may be used in combination. Aluminum is preferable as the metal. Only one of the inorganic oxides may be used, or two or more thereof may be used in combination. Examples of the inorganic oxides include aluminum oxide, silicon oxide, and magnesium oxide. Aluminum oxide is preferable as the metal oxide because it is inexpensive. The inorganic substance layer is preferably a layer formed by vapor deposition.

The inorganic substance that forms the inorganic substance layer is preferably an inorganic oxide, more preferably at least one selected from the group consisting of aluminum oxide, silicon oxide and magnesium oxide, and still more preferably aluminum oxide.

From the viewpoint of gas barrier properties, the thickness of the inorganic substance layer is preferably 1 to 200 nm, more preferably 2 to 150 nm, and still more preferably 3 to 100 nm. When two or more inorganic substance layers are present, the above thickness is a thickness of each inorganic substance layer.

Only one of the substrates may be used, or two or more thereof may be used in combination. Examples of the substrates include polyesters, such as polyethylene terephthalate and polyethylene naphthalate, polyolefins, such as polyethylene and polypropylene, polystyrene, polyamide, polyvinyl chloride, polycarbonate, polyacrylonitrile, and polyimide. The substrate is preferably a polyester, and more preferably polyethylene terephthalate.

The thickness of the substrate is preferably 5 to 50 $\mu$m, more preferably 7 to 40 $\mu$m, and still more preferably 9 to 30 $\mu$m. When two or more of substrates are present, the above thickness is a thickness of each substrate.

The method for applying the coating liquid may be a batch method or may be a continuous method. Examples of coating methods include gravure methods, such as a direct gravure method and a reverse gravure method, roll coating methods, such as a two-roll beat coating method and a bottom-feed three-roll reverse coating method, a doctor knife method, a die coating method, a bar coating method, a dipping method, a spray coating method, a curtain coating method, a spin coating method, a flexo coating method, a screen coating method, and a method using a coating brush or a brush.

Formation of the coating film through drying is easily carried out by heating. This heating may be carried out at normal pressure or may be carried out under reduced pressure. The heating can be carried out using a drying furnace or a heater. The drying temperature is preferably 40 to 150°C, and more preferably 30 to 140°c, and the drying time is preferably 0.01 minute to 24 hours, and more preferably 0.01 to 60 minutes.

The present invention also provides a laminate having a laminated structure including the aforesaid coating film and substrate. The laminate of the present invention is useful as a gas barrier laminate. Descriptions of the coating film and the substrate in the laminate of the present invention are as referred to above.

The laminate of the present invention only needs to include the aforesaid coating film and substrate, and between the layers, other layers may be present. Examples of the other layers include an inorganic substance layer, an adhesive layer, and a primer layer. Description of the inorganic substance layer is as referred to above.

Examples of the laminated structures include "coating film/substrate", "coating film/primer layer/substrate", "coating film/inorganic substance layer/substrate", "coating film/inorganic substance layer/primer layer/substrate", "coating film/primer layer/inorganic substance layer/substrate", "coating film/primer layer/inorganic substance layer/primer layer/substrate", and "coating film/inorganic substance layer/first substrate/adhesive layer/second substrate". In the above embodiments, the layers and the substrates may be each a single layer or may be each composed of two or more layers.

The laminate of the present invention preferably has a laminated structure including the aforesaid coating film, inorganic substance layer and substrate in this order, and the laminate of the present invention more preferably has a laminated structure which consists of the aforesaid coating film, inorganic substance layer and substrate and in which the coating film, the inorganic substance layer and the substrate are layered in this order (that is, "coating film/inorganic substance layer/substrate"). In these embodiments, the inorganic substance layer and the substrate may be each composed of two or more layers, but they are each more preferably a single layer.

The coating film of the present invention, and the layers to constitute the laminate of the present invention other than the inorganic substance layer (coating film, adhesive layer, primer layer, substrate) may contain one or more additives when needed, as long as the effect of the present invention is not impaired. Moreover, the coating liquid for forming the coating film of the present invention (that is, coating liquid of the present invention) may also contain one or more additives.

Examples of the additives include a crosslinking agent for hydrogen-bonding group, an additive having at least one organic functional group, and a colorant. Examples of the crosslinking agents for hydrogen-bonding group include a water-soluble zirconium compound and a water-soluble titanium compound. Examples of the organic functional groups include a hydroxyl group, a formyl group (-CHO), a carbonyl group, a carboxyl group, a nitro group, a sulfo group, an oxy group (-O-), an epoxy group, an amino group, an acetoacetyl group, an alkoxy group, and an isocyanato group (-NCO). Examples of the additives having at least one organic functional group include a crosslinking agent, a coupling agent, an ultraviolet absorbing agent, an antioxidant, an epoxy compound (e.g., glycerol polyglycidyl ether, polypropylene glycol diglycidyl ether), a maleic acid resin, a modified polyolefin resin, and citric acid. Among these, an epoxy compound, a maleic acid resin, a modified polyolefin resin and citric acid are preferable from the viewpoints of gas barrier properties and adhesion properties.

Examples

The present invention will be more specifically described with reference to Examples, etc., but the present invention is in no way restricted by the following Examples, and the present invention can be carried out by appropriately adding modifications as long as they can conform to the purposes described above and below, and they are each incorporated in the technical scope of the present invention.

1. Raw materials

Raw materials used in Examples and Comparative Examples are described below.

(1) Hydroxyl group-containing resin

Hydroxyl group-containing resin: vinyl amine-vinyl alcohol copolymer ("Ultiloc 5003" manufactured by SEKISUI SPECIALTY CHEMICALS AMERICA, LLC., random copolymer, amount of hydroxyl groups per 100 g of hydroxyl group-containing resin: 2 mol, amount of amino groups per 100 g of hydroxyl group-containing resin: 0.27 mol, number-average molecular weight: 20,000, degree of saponification: 99%)

(2) Inorganic layered compound

High-purity montmorillonite ("KUNIPIA-G" manufactured by KUNIMINE INDUSTRIES CO., LTD., thickness a of unit crystal layer: 1.2156 nm)

(3) Liquid medium

Ion-exchanged water (specific electric conductivity: 0.7 $\mu$s/cm or less)

Ethanol

2. Measuring method

Characteristics of the raw materials used in Examples and Comparative Examples and the resulting coating liquids and gas barrier laminates were measured in the following manner.

(1) Amounts of hydroxyl groups and amino groups of hydroxyl group-containing resin

1) A monomer ratio of a vinyl acetate-N-vinylformamide copolymer as a precursor was measured by $^1$H NMR.
2) The vinyl acetate-N-vinylformamide copolymer was hydrolyzed to form a vinyl amine-vinyl alcohol copolymer.
3) Residues of vinyl acetate and N-vinylformamide were measured by $^1$H NMR.
4) The above values were each converted to a value per 100 g.

(Measuring apparatus and conditions)

$^1$H NMR apparatus (400 MHz): "Bruker Avance 400" manufactured by Bruker Corporation
Solvent: DMSO-$d_6$
Sample concentration: 1% by weight
Measuring temperature: 25°C
Number of times of integration: 16 times
D1 (delay between pulses): 0.1 second

(2) Number-average molecular weight of hydroxyl group-containing resin

The number-average molecular weight of the hydroxyl group-containing resin was measured by gel permeation chromatography (GPC) of the following apparatus and conditions. The results are as described above.

(Apparatus and conditions)

GPC apparatus: "Viscotek TDA 305" manufactured by Malvern Panalytical Ltd.

Column: "SB804X2+802.5" manufactured by SOLDEX
Sample solution: aqueous solution containing a measurement sample (concentration: 1% by weight), $NaNO_3$ (pH adjustor, concentration: 0.05 M) and sodium azide (mildewproofing agent, concentration: 0.00077 M)
Detector temperature: 30°C
Column temperature: 30°C

(3) Amount of Na in coating liquid

Samples were each drawn out from the coating liquids obtained in Examples and Comparative Examples, they were subjected to acid decomposition treatment, and the amount of Na on a weight basis relative to the whole sample (coating liquid) was measured by inductively coupled plasma atomic emission spectroscopy (ICP-AES) using an ICP emission spectrometer ("Vista-PRO" manufactured by Agilent Technologies, Inc.).
Next, a solids content of the coating liquid was calculated by the aforesaid drying aid method. The results are set forth in the following Table 1.
From the amount of Na on a weight basis relative to the whole coating liquid and the solids content of the coating liquid described above, the amount of Na on a weight basis relative to the solids content of the coating liquid was calculated. The results are set forth in the following Table 1. In the following Table 1, the "amount of Na on a weight basis relative to the solids content of the coating liquid" is described as "Amount of Na".

(4) Water vapor transmission rate of gas barrier laminate

Water vapor transmission rates of the gas barrier laminates of Examples and Comparative Examples described later were measured using a water vapor transmission rate measuring apparatus ("PERMATRAN-W 3/33" manufactured by MOCON, Inc.) under the conditions of 40°C and 90%RH in accordance with JIS K7129[2008] B method. In this measurement, water vapor was supplied at a substrate side of a gas barrier laminate having a laminated structure of gas barrier layer/inorganic substance layer/substrate (that is, the water vapor supply face of the specimen was a substrate). The results are set forth in the following Table 1.

3. Manufacture and evaluation of coating liquid and gas barrier laminate

Example 1

(1) Manufacture of coating liquid

To a polypropylene container, 110 g of ion-exchanged water and 30 g of a hydroxyl group-containing resin were added, and the temperature was raised to 90°C with stirring the resulting mixture at 1,500 rpm. The mixture was stirred at 90°C and 1,500 rpm for 60 minutes to dissolve the hydroxyl group-containing resin in water, and then the resulting solution was cooled to 60°C. To the resulting solution, 77 g of ethanol was added over a period of 5 minutes with stirring the mixture at 60°C and 1,500 rpm, and the resulting mixture was stirred at 60°C and 1,500 rpm for 10 minutes, thereby obtaining a solution (A).
Next, 15 g of montmorillonite was added to 360 g of ion-exchanged water, and they were stirred at room temperature and 3,500 rpm for 30 minutes, thereby obtaining a dispersion (B).
To a polypropylene container, the solution (A) and the dispersion (B) were added, and a mixture of them was stirred at 60°C, 3,000 rpm and a peripheral velocity of 8.2 m/min for 60 minutes. Thereafter, to the mixture was further added 158 g of ethanol over a period of 15 minutes, and the resulting mixture was stirred at 60°C or lower and cooled down to room temperature, thereby obtaining a dispersion (C).
The resulting dispersion (C) was subjected to high-pressure dispersion treatment using a high-pressure dispersion apparatus ("Ultra-High-Pressure Homogenizer M110-E/H" manufactured by Microfluidics International Corporation, diameter of capillary; 100 $\mu$m) under the conditions of 30°C and 1250 kgf/cm$^2$, thereby obtaining a dispersion (D).

To the resulting dispersion (D), a cation exchange resin (Duolite C255LFH (manufactured by Rohm & Haas Japan K.K.) was added in an amount of 1.5 parts by weight relative to 100 parts by weight of the dispersion (D), thereby carrying out cation exchange. Thereafter, the cation exchange resin was removed by filtration, thereby preparing a coating liquid (content of hydroxyl group-containing resin per 100% by weight of coating liquid: 4.0% by weight, content of montmorillonite: 2.0% by weight, content of liquid medium (water and ethanol): 94.0% by weight, amount of ethanol per 100 parts by weight of liquid medium: 33.3 parts by weight). pH of the resulting coating liquid was 9.4.

(2) Manufacture of gas barrier laminate

The resulting coating liquid was applied to an inorganic substance layer of an aluminum oxide deposited film (substrate: polyethylene terephthalate (PET), substrate thickness: 12 μm, inorganic substance layer: aluminum oxide layer, thickness of inorganic substance layer: 5 to 7.5 nm) by a bar coater, and dried in a hot-air oven at 80°C for 20 minutes, thereby manufacturing a gas barrier laminate having a laminated structure of gas barrier layer (coating film)/inorganic substance layer/substrate (thickness of gas barrier layer: 0.2 μm). The drying was carried out in an air atmosphere at normal pressure.

(3) Evaluation of gas barrier laminate

A water vapor transmission rate (I) of a gas barrier laminate having been held under the conditions of 40°C and 90%RH for one hour, and a water vapor transmission rate (II) of a gas barrier laminate having been held under the conditions of 40°C and 90%RH for 10 hours were each measured as previously described. The results are set forth in the following Table 1. In the "(II)/(I)" column of the following Table 1, a ratio of the water vapor transmission rate (II) to the water vapor transmission rate (I) (water vapor transmission rate (II)/water vapor transmission rate (I)) is described.

Example 2

A coating liquid and a gas barrier laminate were manufactured and the gas barrier laminate was evaluated, in the same manner as in Example 1 except that to the dispersion (D) obtained in Example 1, the cation exchange resin was added in an amount of 6.0 parts by weight relative to 100 parts by weight of the dispersion (D). pH of the resulting coating liquid was 9.6.

Example 3

A coating liquid (1) was prepared in the same manner as in Example 1 except that to the dispersion (D) obtained in Example 1, the cation exchange resin was added in an amount of 1.0 part by weight relative to 100 parts by weight of the dispersion (D). Moreover, a coating liquid (2) was prepared in the same manner as in Example 1 except that to the dispersion (D) obtained in Example 1, the cation exchange resin was added in an amount of 4.0 parts by weight relative to 100 parts by weight of the dispersion (D). The resulting coating liquid (1) and coating liquid (2) were mixed, thereby manufacturing a coating liquid (3). pH of the resulting coating liquid (3) was 9.6. Using this coating liquid (3), a gas barrier laminate was manufactured and evaluated in the same manner as in Example 1.

Comparative Example 1

A coating liquid and a gas barrier laminate were manufactured and the gas barrier laminate was evaluated, in the same manner as in Example 1 except that to the dispersion (D) obtained in Example 1, the cation exchange resin was added in an amount of 1.1 parts by weight relative to 100 parts by weight of the dispersion (D). pH of the resulting coating liquid was 9.7.

Comparative Example 2

A coating liquid and a gas barrier laminate were manufactured and the gas barrier laminate was evaluated, in the same manner as in Example 1 except that to the dispersion (D) obtained in Example 1, the cation exchange resin was added in an amount of 0.5 part by weight relative to 100 parts by weight of the dispersion (D). pH of the resulting coating liquid was 10.9.

Comparative Example 3

A coating liquid and a gas barrier laminate were manufactured and the gas barrier laminate was evaluated, in the same manner as in Example 1 except that the dispersion (D) obtained in Example 1 was not treated with the cation exchange resin and was used as it was as a coating liquid. pH of the coating liquid (dispersion (D)) of Comparative Example 3 was 12.2.

[Table 1]

| | Coating liquid | | | Gas barrier laminate | | |
|---|---|---|---|---|---|---|
| | Solids content (% by weight) | pH | Amount of Na (ppm) | Water vapor transmission rate (I) after holding for 1 hour (g/ (m$^2$·day)) | Water vapor transmission rate (II) after holding for 10 hours (g/ (m$^2$·day)) | (II)/ (I) |
| Example 1 | 6 | 9.4 | 283 | 1.04 | 0.76 | 0.73 |
| Example 2 | 6 | 9.6 | 83 | 0.84 | 0.81 | 0.96 |
| Example 3 | 6 | 9.6 | 667 | 0.91 | 0.89 | 0.98 |
| Comparative Example 1 | 6 | 9.7 | 2833 | 1.27 | 1.39 | 1.09 |
| Comparative Example 2 | 6 | 10.9 | 8833 | 3.75 | 4.61 | 1.23 |
| Comparative Example 3 | 6 | 12.2 | 14667 | 4.07 | 5.02 | 1.23 |
| Holding conditions for gas barrier laminate: 40°C and 90%RH | | | | | | |

As shown in the above Table 1, the gas barrier laminates of Examples 1 to 3 having been each manufactured from a coating liquid in which the amount of Na was 2,500 ppm or less on a weight basis relative to the solids content of the coating liquid exhibited low water vapor transmission even after they were held under the conditions of high temperature (40°C) and high humidity (90%RH) for 10 hours.

Reference Example 1

The coating liquid obtained in Example 2 was applied to a corona-treated surface of a biaxially oriented polypropylene film (described as "OPP" hereinafter) ("FOA" manufactured by FUTAMURA CHEMICAL CO., LTD.) having a thickness of 20 μm and dried in a hot-air oven at 100°C for one minute, thereby obtaining a laminate having a laminated structure of coating film/substrate (OPP).

Reference Example 2

A corona-treated surface of OPP was subjected to corona treatment once by corona surface modification test equipment ("TEC-4AX" manufactured by KASUGA DENKI, INC.) at 60 W and a discharge rate of 6 m/min. A laminate having a laminated structure of coating film/substrate (OPP) was obtained in the same manner as in Reference Example 1, except that the coating liquid obtained in Example 2 was applied to the corona-treated surface.

Reference Example 3

To the coating liquid obtained in Example 2, a maleic acid resin aqueous solution ("MALKYD 32-30WS" manufactured by ARAKAWA CHEMICAL INDUSTRIES, LTD.) was added in such a manner that the solids content of the maleic acid resin aqueous solution became 5 parts by weight relative to 100 parts by weight of the solids content of the coating liquid, and they were sufficiently stirred and mixed, thereby preparing a coating liquid. A laminate having a laminated structure of coating film/substrate (OPP) was obtained in the same manner as in Reference Example 1, except that the thus obtained coating liquid was used.

Reference Example 4

A laminate having a laminated structure of coating film/substrate (OPP) was obtained in the same manner as in Reference Example 3, except that the amount of the maleic acid resin aqueous solution ("MALKYD 32-30WS" manufactured by ARAKAWA CHEMICAL INDUSTRIES, LTD.) added was changed in such a manner that the solids content of the maleic acid resin aqueous solution became 10 parts by weight relative to 100 parts by weight of the solids content of the coating liquid.

Reference Example 5

A laminate having a laminated structure of coating film/substrate (OPP) was obtained in the same manner as in Reference Example 3, except that the amount of the maleic acid resin aqueous solution ("MALKYD 32-30WS" manufactured by ARAKAWA CHEMICAL INDUSTRIES, LTD.) added was changed in such a manner that the solids content of the maleic acid resin aqueous solution became 20 parts by weight relative to 100 parts by weight of the solids content of the coating liquid.

Reference Example 6

To the coating liquid obtained in Example 2, an epoxy compound ("Denacol EX-313" manufactured by Nagase Chemtex Corporation, glycerol polyglycidyl ether) was added in such a manner that the amount of the epoxy compound became 5 parts by weight relative to 100 parts by weight of the solids content of the coating liquid, and they were sufficiently stirred and mixed, thereby preparing a coating liquid. A laminate having a laminated structure of coating film/substrate (OPP) was obtained in the same manner as in Reference Example 1, except that the thus obtained coating liquid was used.

Reference Example 7

To the coating liquid obtained in Example 2, an epoxy compound ("Denacol EX-920" manufactured by Nagase Chemtex Corporation, polypropylene glycol diglycidyl ether) was added in such a manner that the amount of the epoxy compound became 20 parts by weight relative to 100 parts by weight of the solids content of the coating liquid, and they were sufficiently stirred and mixed, thereby preparing a coating liquid. A laminate having a laminated structure of coating film/substrate (OPP) was obtained in the same manner as in Reference Example 1, except that the thus obtained coating liquid was used.

Reference Example 8

To the coating liquid obtained in Example 2, a modified polyolefin resin aqueous dispersion ("ARROWBASE DA-1010" manufactured by UNITIKA LTD.) was added in such a manner that the solids content of the modified polyolefin resin aqueous dispersion became 20 parts by weight relative to 100 parts by weight of the solids content of the coating liquid, and they were sufficiently stirred and mixed, thereby preparing a coating liquid. A laminate having a laminated structure of coating film/substrate (OPP) was obtained in the same manner as in Reference Example 1, except that the thus obtained coating liquid was used.

Reference Example 9

A urethane-based primer (manufactured ty Toyo-Morton, Ltd.) was applied to a corona-treated surface of OPP and dried in a hot-air oven at 80°C for 20 minutes, thereby forming a primer layer (thickness of primer layer: 0.7 $\mu$m). A laminate having a laminated structure of coating film/primer layer/substrate (OPP) was obtained in the same manner as in Reference Example 1, except that the coating liquid obtained in Example 2 was applied to this primer layer.

Reference Example 10

A laminate having a laminated structure of coating film/primer layer/substrate (OPP) was obtained in the same manner as in Reference Example 9, except that the coating liquid obtained in Reference Example 3 was used instead of the coating liquid obtained in Example 2.

Measurement of peel strength

A urethane-based adhesive (manufactured by Toyo-Morton, Ltd.) was applied to each of the coating films of the laminates obtained in Reference Examples 1 to 10 and dried in a hot-air oven at 80°C for 20 minutes, thereby forming an adhesive layer (thickness of adhesive layer: 16 $\mu$m). Onto this adhesive layer, a non-stretched polypropylene film ("P1111" manufactured by TOYOBO CO., LTD.) having a thickness of 50 $\mu$m was laminated as a sealant by a dry laminating method, and they were subjected to aging at 40°C for one day, thereby obtaining a laminate for peel strength evaluation, which had a laminated structure of "sealant/adhesive layer/coating film/substrate (OPP)" or "sealant/adhesive layer/coating film/primer layer/substrate (OPP).

The resulting laminate for peel strength evaluation was cut into a strip having a width of 15 mm, then its sealant and substrate were each held by a chuck, and a 180° peel test was carried out to measure a 180° peel strength. The 180° peel test was carried out using a small desktop tester ("EZ-LX" manufactured by Shimadzu Corporation) under the conditions of 23°C, 50%RH, and a pulling rate of 300 mm/min. The results are set forth in the following Table 2. A test strip whose 180° peel strength was unable to be measured due to fracture of the substrate is described as "material fracture" in the following Table 2.

[Table 2]

|  | 180° Peel strength (N/15 mm) |
| --- | --- |
| Reference Example 1 | 1.0 |
| Reference Example 2 | Material fracture |
| Reference Example 3 | 2.3 |
| Reference Example 4 | Material fracture |
| Reference Example 5 | Material fracture |
| Reference Example 6 | 1.5 |
| Reference Example 7 | 1.7 |
| Reference Example 8 | 1.6 |
| Reference Example 9 | Material fracture |
| Reference Example 10 | Material fracture |

Industrial Applicability

From the coating liquid of the present invention, a gas barrier laminate exhibiting a low water vapor transmission rate even after it is held under the conditions of high temperature and high humidity can be manufactured. Such gas barrier laminates are useful as packaging materials for foods, cosmetics, etc.

The present application is based on Japanese Patent Application No. 2019-205655 filed in Japan, and the contents thereof are all incorporated in the specification of the present application.

**Claims**

1.   A coating liquid comprising a hydroxyl group-containing resin, an inorganic layered compound and a liquid medium, wherein an amount of sodium (Na) in the coating liquid is 2,500 ppm or less on a weight basis relative to a solids content of the coating liquid.

2.   The coating liquid according to claim 1, wherein an amount of hydroxyl groups per 100 g of the hydroxyl group-containing resin is 1.50 to 2.27 mol.

3.   The coating liquid according to claim 1 or 2, wherein the hydroxyl group-containing resin further has an amino group.

4.   The coating liquid according to claim 3, wherein an amount of amino groups per 100 g of the hydroxyl group-containing resin is 0.046 to 0.682 mol.

5.   The coating liquid according to any one of claims 1 to 4, wherein a number-average molecular weight of the hydroxyl group-containing resin is 10,000 to 50,000.

6.   The coating liquid according to any one of claims 1 to 5, wherein the hydroxyl group-containing resin is a vinyl amine-vinyl alcohol copolymer.

7. The coating liquid according to any one of claims 1 to 6, wherein a content of the hydroxyl group-containing resin is 0.2 to 9.05% by weight relative to the whole coating liquid.

8. The coating liquid according to any one of claims 1 to 7, wherein the liquid medium comprises water and at least one selected from the group consisting of methanol, ethanol, 1-propanol, 2-propanol and 1-butanol.

9. The coating liquid according to claim 8, wherein the total amount of at least one selected from the group consisting of methanol, ethanol, 1-propanol, 2-propanol and 1-butanol is 1 to 70 parts by weight per 100 parts by weight of the liquid medium.

10. The coating liquid according to any one of claims 1 to 7, wherein the liquid medium comprises water and ethanol.

11. The coating liquid according to claim 10, wherein an amount of ethanol is 1 to 70 parts by weight per 100 parts by weight of the liquid medium.

12. The coating liquid according to any one of claims 1 to 11, wherein a content of the liquid medium is 90 to 99.5% by weight relative to the whole coating liquid.

13. The coating liquid according to any one of claims 1 to 12, wherein the inorganic layered compound is a clay mineral.

14. The coating liquid according to any one of claims 1 to 12, wherein the inorganic layered compound is montmorillonite.

15. The coating liquid according to any one of claims 1 to 14, wherein a content of the inorganic layered compound is 0.047 to 6.0% by weight relative to the whole coating liquid.

16. A coating film formed from the coating liquid according to any one of claims 1 to 15.

17. A laminate having a laminated structure comprising the coating film according to claim 16 and a substrate.

18. A coating film comprising a hydroxyl group-containing resin and an inorganic layered compound, wherein an amount of sodium (Na) in the coating film is 2,500 ppm or less on a weight basis relative to the whole coating film.

19. A laminate having a laminated structure comprising the coating film according to claim 18 and a substrate.

## INTERNATIONAL SEARCH REPORT

| International application No. |
| --- |
| PCT/JP2020/042024 |

### A. CLASSIFICATION OF SUBJECT MATTER
B32B 27/20(2006.01)i; C08K 7/04(2006.01)i; C08L 101/06(2006.01)i; C09D 129/02(2006.01)i; C09D 139/02(2006.01)i; C09D 201/06(2006.01)i; C09D 7/20(2018.01)i; C09D 7/61(2018.01)i
FI:      C09D201/06; B32B27/20 Z; C09D7/61; C09D139/02; C09D7/20; C08L101/06; C08K7/04; C09D129/02

According to International Patent Classification (IPC) or to both national classification and IPC

### B. FIELDS SEARCHED

Minimum documentation searched (classification system followed by classification symbols)
B32B1/00-43/00; C08K3/00-13/08; C08L1/00-101/14; C09D1/00-10/00; C09D101/00-201/10; B65D65/00-65/46; B05D1/00-7/26

Documentation searched other than minimum documentation to the extent that such documents are included in the fields searched
Published examined utility model applications of Japan         1922-1996
Published unexamined utility model applications of Japan       1971-2020
Registered utility model specifications of Japan               1996-2020
Published registered utility model applications of Japan       1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2004-50410 A (SUMITOMO CHEMICAL INDUSTRY COMPANY LIMITED) 19 February 2004 (2004-02-19) claims 1-2, paragraphs [0001], [0009], [0022], [0063]-[0064], example 1 | 1, 5, 7-19<br>2-4, 6 |
| X<br>A | JP 2012-126112 A (TOYOBO BOSEKI KABUSHIKI KAISHA) 05 July 2012 (2012-07-05) claims 1-3, 6, paragraphs [0001], [0008], [0029], [0042],[0049], examples 1-9, table 1 | 1-2, 7-19<br>3-6 |
| X<br>A | JP 2011-218805 A (TOYOBO BOSEKI KABUSHIKI KAISHA) 04 November 2011 (2011-11-04) claims 1-2, 6, paragraphs [0001], [0020]-[0021], [0032], preparation examples 1-11 | 1-2, 7-19<br>3-6 |

☒  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 December 2020 (24.12.2020) | 12 January 2021 (12.01.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 4 059 711 A1**

<table>
<tr><td colspan="2">INTERNATIONAL SEARCH REPORT</td><td>International application No.</td></tr>
<tr><td colspan="2"></td><td>PCT/JP2020/042024</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2002-338715 A (TORAY INDUSTRIES, INC.) 27 November 2002 (2002-11-27) claims 1-2, 5-6, paragraphs [0017],[0028],[0038],[0059]-[0060], examples 2, 4, table 1 | 1-2, 5, 7-19<br>3-4, 6 |
| A | JP 2008-546571 A (MITSUBISHI POLYESTER FILM, INC.) 25 December 2008 (2008-12-25) claims 1-36, paragraphs [0019]-[0072], examples, table 1 | 1-19 |

Form PCT/ISA/210 (continuation of second sheet) (January 2015)

**INTERNATIONAL SEARCH REPORT**
Information on patent family members

| International application No. |
| --- |
| PCT/JP2020/042024 |

| Patent Documents referred in the Report | Publication Date | Patent Family | Publication Date |
| --- | --- | --- | --- |
| JP 2004-50410 A | 19 Feb. 2004 | (Family: none) | |
| JP 2012-126112 A | 05 Jul. 2012 | (Family: none) | |
| JP 2011-218805 A | 04 Nov. 2011 | (Family: none) | |
| JP 2020-338715 A | 27 Nov. 2002 | (Family: none) | |
| JP 2008-546571 A | 25 Dec. 2008 | US 2007/0031654 A1 claims 1-36, paragraphs [0018]-[0073], examples, table 1 EP 1910451 B1 KR 10-2008-0030617 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005220154 A
- JP 2012502163 W

- JP 2019205655 A